# EUROPEAN PATENT SPECIFICATION

(11) **EP 2 557 036 B1**
(45) Date of publication and mention of the grant of the patent: **13.01.2016**
(21) Application number: 11177493.1
(22) Date of filing: 12.08.2011
(51) Int. Cl.: B64D 11/00

(54) **Passenger service unit**
Passagierinterfaceeinheit
Panneau d'interface pour passagers

(43) Date of publication of application: 13.02.2013
(73) Proprietor: Zodiac Aerotechnics, 78370 Plaisir (FR)
(72) Inventor: Rittner,, Wolfgang, 23623 Ahrensbök (DE); Meckes,, Rüdiger, 23919 Berkenthin (DE); Weinmann, Hasso, 23564 Lübeck (DE); Boomgaarden, Günter, 23684 Scharbeutz (DE)
(74) Representative: Eisenführ Speiser

(56) References cited:
- EP-A1- 1 973 299
- DE-A1- 19 931 189
- DE-A1-102006 050 534
- DE-U1-202009 018 070
- US-A- 4 944 908
- US-A1- 2003 141 414
- US-A1- 2004 000 616

## Description

The invention relates to a passenger service unit (PSU) for an aircraft passenger cabin, comprising at least one passenger service panel with fastening elements for fastening the panel to an interior component or framework of the aircraft, at least one electric component for passenger entertainment or information mechanically attached to the passenger service panel, at least one electrical connecting terminal for electrical connection of said at least one electric component and an electrical connection for supplying electrical energy and/or transmitting information to said at least one electric component. A further aspect of the invention is a method of manufacturing a passenger service panel. A particular field of application of such passenger service units is the field of civil aircrafts. Usually, the passenger service unit is located above the seats of the passenger and/or crew members but it may alternatively be arranged on the backside of a seat rest. For entertaining and/or providing the passenger with information the passenger service unit contains for example reading lights, loudspeakers, illuminated signs, automatically deployed oxygen masks and louvers providing conditioned air.

Document US 2004/000616 describes such a passenger service unit.

Passenger service units of the aforementioned type known from the state of the art consist generally of one plastic panel whereon all functional components are mounted to after its manufacturing. Usually these panels are furnished with an identification plate on its inner face which cannot identify the unit in assemble state. Modern civil aircrafts may transport a high number of passengers ranging from about 50 to several hundred of passengers. This leads to time consuming production of the panel, installation and maintenance for civil aircrafts. Generally, it is known to reduce this time and effort by not providing a PSU for each seat of passenger but instead to supply a couple of seats using one single PSU.

It is further known to provide a system for transferring the sound to the passenger cabin, in particular a loudspeaker in such PSU. A conventional loudspeaker is known in the state of the art and need louvers to transmit the sound to the cabin. Therefore, the loudspeakers may be only located at special places in the aircraft. Exemplarily, for safety purposes the loudspeakers may be not located in direct vicinity to an oxygen supply device. In addition, producing a panel for such a loudspeaker is much more complicated than producing a panel without it. Finally, the aesthetic design will be negatively affected and cleaning of the PSU will be complicated.

In view of the foregoing it is an object of the invention to provide a passenger service unit for an aircraft which overcomes at least some of the aforementioned drawbacks or which at least improves the production of a passenger service unit.

The above objects have been achieved according to the invention by a passenger service unit according to claim 1.

Such a passenger service panel is in the following also designated as service panel or panel.

In an embodiment of the invention the passenger service unit is installed above the seats. In an alternative embodiment of the invention it may be installed in a side wall, in particular of an aircraft passenger cabin. The panel of such a passenger service unit serves as a cover and as a carrier for the electrical connection from the passenger cabin. In an alternative embodiment of the invention said passenger service unit may be installed in a coach or train.

In an embodiment of the invention at least one electric component such as a reading light or illuminated sign is mechanically attached to said panel. Therefore, the passengers are provided with light or with information on the illuminated sign such as "fasten your seat belt" during the landing of an aircraft. Such electric components are connected with at least one electrical connecting terminal. The term terminal is used in the following for the point at which an electrical connection expires and provides a point of connection to external circuit. Such terminal may simply be the end of a conducting path or it may be fitted with a connector or fastener like a plug or socket. Such an electrical connection supplies the electrical energy and/or transmits information to the electric component. The electrical connection comprises, in particular consists of at least one conducting path directly attached to the passenger service panel. Such direct attachment describes a method such as embedding, pressing, printing or coating whereupon the conducting paths clinging to the passenger service panel. By attaching the conducting path in such way to the passenger service panel the conducting path may be used in single paths and/or without an insulating. The surface of the panel may be occupied with an insulating varnish or a second material layer.

The invention offers considerable weight advantages. Further, the manufacturing costs of the panel are considerably reduced and the risk of change to the electrical connections during mounting, maintenance and use is minimized. As a further advantage of this invention the conducting path may make a contribution to the structural strength by attaching them directly to said passenger service panel.

According to the invention, the conducting paths are at least partly embedded in the passenger service panel. The conducting paths are preferably arranged in the panel so that they serve reinforcing the material the passenger service unit is made of. Therefore, the panel may be adapted to high loads. In particular, the conducting paths may be arranged such that they extend across and along regions of the panel explosed to high mechanical loads.

In an embodiment of the invention the conducting paths are clinging to the passenger service panel partly exposed to the material the passenger service panel is made of. In an alternative embodiment of the invention the conducting paths are completely surrounded by the material the passenger service panel is made of. In a further alternative embodiment of the invention the passenger service panel is made of composites, in particular of sheet molding compound. In an alternative embodiment said passenger service panel is made of plastics.

To manufacture such a panel any process used to shape the material like e.g. injection molding, deep drawing, laminating or squeeze molding may be used.

According to a further embodiment of the invention, the electrical connecting terminal is directly connected to such conducting path and is at least partly exposed to the outside for electrical connection. An electrically conducting counter piece may be contacted to this area. In an embodiment of the invention in particular the electric components like reading lights are electrically connected to said terminal.

According to a further preferred embodiment of the invention the passenger service unit comprises an electrical or electronic circuitry for mechanically support and electrical connection of electronic components, wherein said circuitry is at least partly embedded in a material the passenger service panel is made of and/or applied to the passenger service panel by a coating technique, in particular by printing electrical conducting paths to a surface of the panel.

According to a further preferred embodiment of the invention the passenger service unit comprises an RFID tag for identification and for tracking the passenger service unit. Such an RFID tag uses radio waves to exchange data between a reader and an electronic tag attached to the passenger service unit for the purpose of identification and/or tracking. According to the invention, the RFID tag may preferably be configured such that maintenance data like e.g. operation hours, maintenance cycles, service and replacement events are stored therein an can be updated during use of the PSU.

According to a further preferred embodiment of the invention the passenger service unit comprises one system of voice coil for initiating a vibration on the passenger service panel or a part thereof, wherein the system of voice coil is mechanically contacted to the passenger service panel, such that the openings for acoustic wave transmission from a loudspeaker are replaced by the panel. Such a system of voice coil contacted to the passenger service panel is used as an area loudspeaker thus preventing the need to provide openings for acoustic wave transmission from a loudspeaker through the panel.

In an alternative embodiment said passenger service panel is part of a passenger service unit comprising at least one electric component for passenger entertainment and/or information mechanically attached to the passenger service panel, at least one electrical connecting terminal for electrical connection of said at least one electric component and an electrical connection for supplying electrical energy and/or transmitting information to said at least one electric component, wherein the electrical connection is mounted to the passenger service panel. In a further alternative embodiment of the invention the passenger service panel comprises an oxygen supply device. Such oxygen supply device comprises at least one oxygen mask and a lid or cover releasable for providing said oxygen mask to the passenger in case of an unplanned loss of cabin pressure. In a still further embodiment of the invention the passenger service panel is part of a passenger service unit, in particular of a passenger service unit of an aircraft.

According to a further embodiment of the invention the sounding board need no openings like louvers for transferring the sound to the aircraft passenger cabin. Louvers tend to absorb dirt such as dust, wherein the cleaning of said louvers is time consuming. Furthermore the production of a panel with louvers is more complicated than the production of a panel without louvers.

According to a still further embodiment of the invention the passenger service unit comprises at least one dustproof area with at least one wall encapsulating the dustproof area, in particular a box for housing a oxygen supply device, wherein the system of voice coil is attached to the at least one wall of the dustproof area. In an alternative embodiment of the invention the system of voice coil is attached to the panel adjacent to said dustproof area. Exemplarily the system of voice coil is located between the reading lights and the illuminated signs or between the RFID tag and the oxygen supply device.

A further aspect of the invention is a method according to claim 9 of producing a passenger service panel in a mold.

The mold is designed to form the features of the desired panel like cut-outs in that reading lights may be applied after the production of the service panel. In an embodiment of the invention the material of the passenger service panel is applied to a heated barrel, mixed and pressed into a mold cavity. In such a mold cavity the material is cooled down and hardens to the configuration of the mold cavity.

According to a preferred embodiment of said method the method comprises the steps of placing at least one circuitry and/or RFID tag in the mold, wherein the at least one conducting path, circuitry and/or RFID tag is placed in the mold before the final molding of the passenger service panel in particular before filling the mold with said liquid material. Advantageously the panel with the conducting paths, circuitry and/or RFID tag is thus manufactured and integrally formed in one producing process.

According to a preferred embodiment of the above mentioned method the method comprises the step of that attaching at least one conducting path, circuitry and/or RFID tag to the passenger service panel by a coating process.

According to a preferred embodiment of the above mentioned method the electronic components can be covered with a wire mesh for thermal protection which however allows radio waves to be transmitted during the forming process. Preferably the RFID tag is surrounded by said wire mesh.

According to a preferred embodiment of the above mentioned method a forming process like injection molding, laminating, deep drawing or pressing is used to form the passenger service unit.

According to a preferred embodiment of the above mentioned method the conducting path will be fixed in a surrounding material of the passenger service panel without separate insulating, wherein the electrical connecting terminal is at least partly exposed to the outside for electrical connection. This offers considerable weight advantages. In an embodiment of the invention an insulating varnish may be provided or the structural material of the passenger service panel may be used for electrical insulating purposes.

According to a preferred embodiment of the above mentioned method the passenger service panel is made of sheet molding compound. In an embodiment of the invention such a sheet molding compound in sheet form may be generated by mixing resin filler with glass fibers. In an alternative embodiment of the invention the panel is processed by extruding said material. In an alternative embodiment of the invention components like conducting paths or RFID tag are inserted in the mold before the extrusion process is finished. This leads to weight and cost advantages.

A further aspect of the invention is a method for providing information and/or entertainment to passengers of an aircraft comprising the steps of electrical connecting of electrical connection, in particular conducting paths directly attached to a passenger service panel, with electric components mechanically attached to the passenger service panel, transmitting information and/or entertainment to the electric components, wherein the information and/or entertainment consist in particular of an audible signal. In an embodiment of the invention the audible signal comprises information intended for all passengers such as landing information or safety information and the like.

According to a preferred embodiment of the method for providing information and/or entertainment the method comprising the steps of initiating a vibration by at least one system of voice coil on a sounding board for producing transverse waves, uniform propagation of the transverse waves in all directions, wherein a passenger service unit, in particular according to an above mentioned passenger service unit, is used as the sounding board. Therefore, the passenger service unit acts like an area loudspeaker that needs no louvers for transferring the sound to the passenger cabin.

According to a further preferred embodiment of the method for providing information and/or entertainment the at least one system of voice coil can be located in areas of encapsulation against dust, in particular in an oxygen supply system.

A further aspect to the invention is an aircraft, in particular an aircraft passenger cabin, comprising a passenger service unit according to one above mentioned. In an alternative embodiment of the invention the above mentioned passenger service panel is arranged in a coach or a train.

Preferred embodiments of the invention are described with reference to the Figures wherein
- Fig. 1: is a schematical top view of a passenger service unit according to a first embodiment of the invention,
- Fig. 2: is a schematical side view of a passenger service unit according to a second embodiment of the invention,
- Fig. 3: is a schematical top view of a passenger service unit according to a third embodiment of the invention,
- Fig. 4: is a schematical top view of a passenger service unit according to a fourth embodiment of the invention, and
- Fig. 5: is a schematical top view of an oxygen module according to an embodiment of the invention.

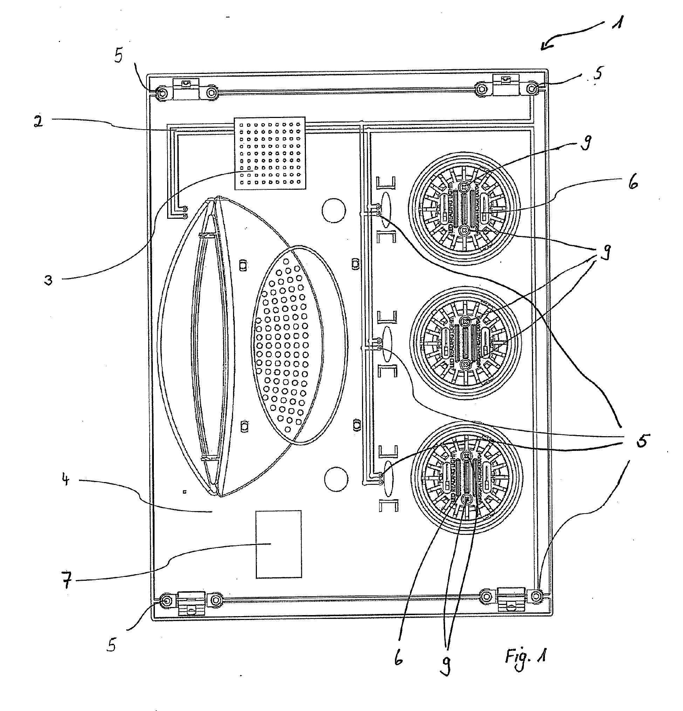

Referring to Fig. 1, a passenger service unit 1 according to a first embodiment of the invention comprises a passenger service panel 4 and reading lights as an example of electric components 6. Furthermore the passenger service panel 4 comprises conducting paths 2, a circuitry 3 and an RFID tag 7 that are directly attached to the passenger service panel 4. The electrical connecting terminals 5 for connecting the conducting paths and for example the reading lights 6 are exposed. The passenger service unit 1 comprises also electrical connecting terminals 5 at the edges for electrical connection between at least two panels 4.

Regarding to Fig. 1, the reading lights 6 are mechanically attached by screws 9 to the passenger service unit 1. In the production process a cut-out may be left in the passenger service panel 4 without material in the size of the reading lights 6 for applying these.

Such a passenger service unit 1 may be located in a passenger cabin for example in an aircraft, a coach or a train.

According to a first embodiment the conducting paths 2, the circuitry 3 and the RFID tag 7 are embedded in the passenger service panel 4.

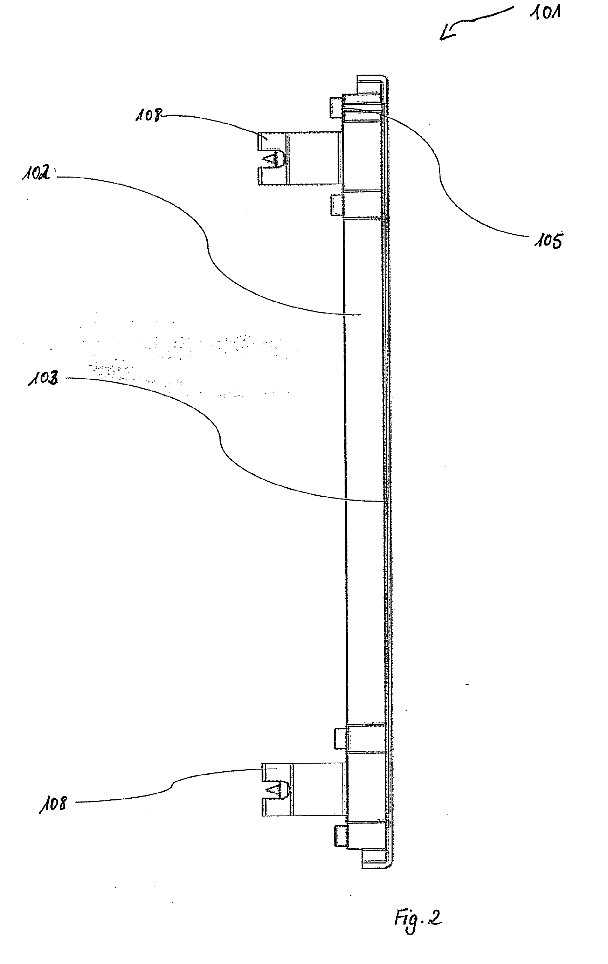

Referring to Fig. 2, a passenger service unit 101 according to a second embodiment of the invention comprises electrical connecting terminals 105, conducting paths 102, and a circuitry 103. Furthermore, the passenger service unit 101 comprises two panel fixations 108 for connecting the panel with another one. These panel fixations may be used to conduct electrical signals or power supply via the panel fixations 108 to the passenger service unit rail system of the aircraft.

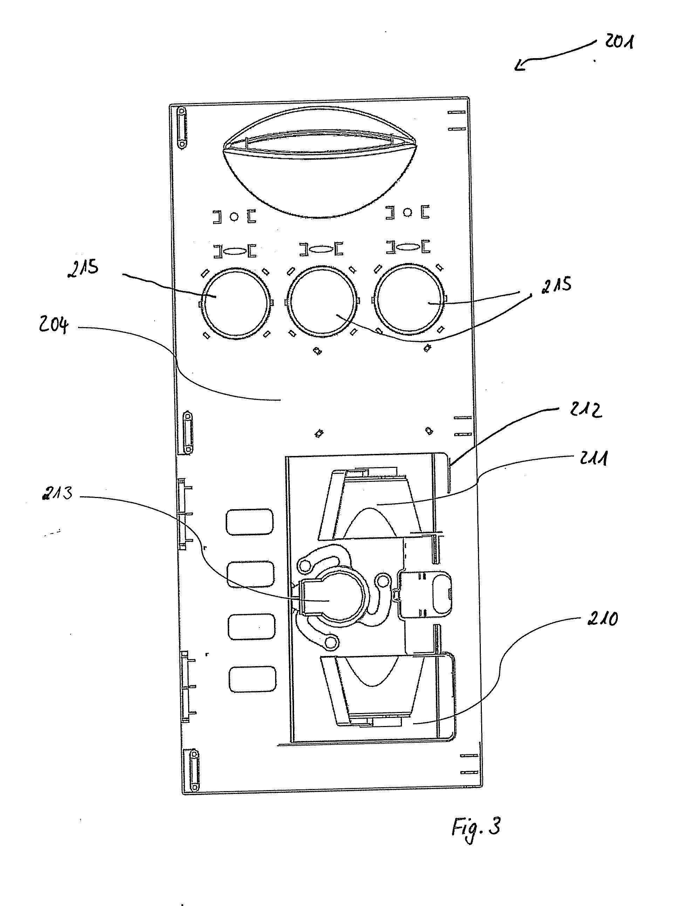

Fig. 3 shows a passenger service unit 201 according to a third embodiment of the invention comprising an oxygen supply device 212 and a passenger service panel 204. The oxygen supply device 212 comprises an oxygen door 210 and two oxygen masks 211. The oxygen supply device 212 further comprises a system of voice coil 213. The system of voice coil 213 is mechanically contacted to the oxygen supply device 212 such that the passenger service panel 204 acts like a sounding board transferring the sound to the passenger cabin. The location of the voice coil system 209 in the oxygen supply device 212 is only possible because the sounding board need no louvers for transferring the sound to the passenger cabin. Otherwise the oxygen supply device 212 may be precariously to be pollute by dust or dirt absorbed from the surroundings.

In addition, Fig. 3 shows three cut-outs 215 for applying for example three reading lights (not shown). These will be mounted after the production process to the passenger service unit 201 to provide the passenger with light.

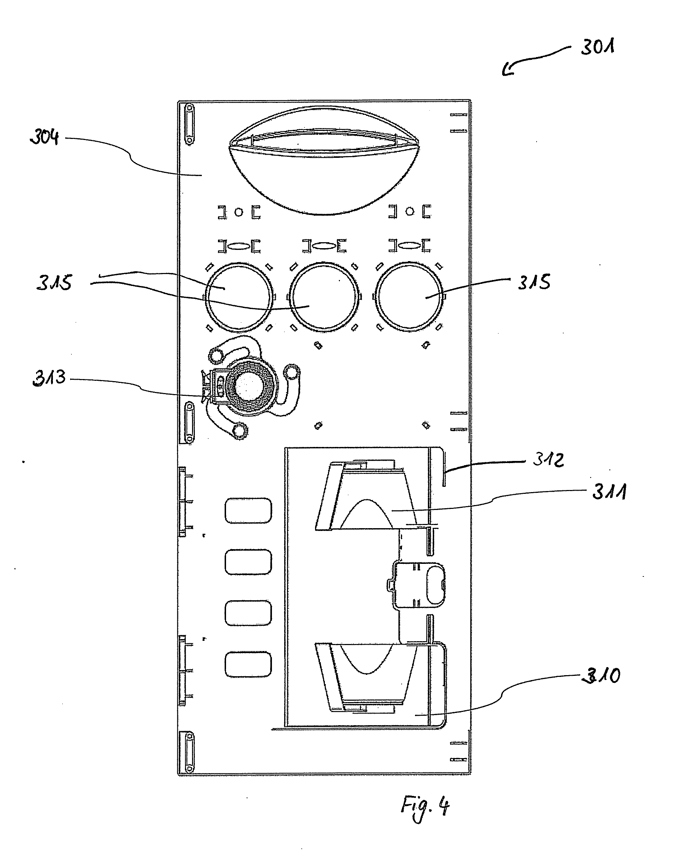

Referring to Fig. 4, a passenger service unit 301 according to a fourth embodiment of the invention comprises a passenger service panel 304, a system of voice coil 313 and an oxygen supply device 312. The oxygen supply device 312 further comprises two automatically deployed oxygen masks 311 and one oxygen door 310. The system of voice coil 313 is attached to the passenger service panel 304 beyond the oxygen supply device 312 such that the passenger service panel 304 may act like a sounding board for transferring the sound to the passenger cabin. In an alternative embodiment of the invention the system of voice coil 313 is mechanically contacted to the passenger service panel 304 at any desired position.

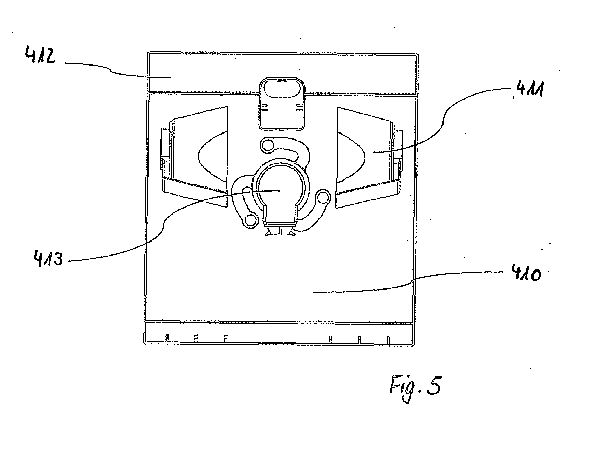

Referring to Fig. 5, an oxygen supply device 412 according to an embodiment of the invention comprises two oxygen masks 411, an oxygen door 410 and one system of voice coil 413. The pictured system of voice coil 413 is attached to the oxygen supply device 412. This is only possible due to fact that the system of voice coil 413 needs no louvers to transfer the sound to the passenger cabin.

The oxygen door 410 may open automatically if in the passenger cabin of an aircraft, in particular of a civil aircraft occurs a decompression. The oxygen masks 411 may fall down and provide the passengers with oxygen.

## Claims

1. A passenger service unit (1, 101, 201, 301), in particular for an aircraft passenger cabin, comprising:
- at least one passenger service panel (4, 104, 204, 304) with fastening elements for fastening the panel to an interior component or framework of the aircraft,
- at least one electric component (6) for passenger entertainment or information mechanically attached to the passenger service panel (4, 104, 204, 304),
- at least one electrical connecting terminal (5, 105) for electrical connection of said at least one electric component (6) and
- an electrical connection for supplying electrical energy and/or transmitting Information to said at least one electric component (6),
**characterized in that** the electrical connection comprises, in particular consists of conducting paths (2, 102) directly attached to the passenger service panel (4, 104, 204, 304) and at least partly embedded in a material the passenger service panel (4, 104, 204, 304) is made of.

2. The passenger service unit (1, 101, 201, 301) according to any of the preceding claims, **characterized in that** the electrical connecting terminal (5, 105) is at least partly exposed to the outside for electrical connection.

3. The passenger service (1, 101, 201, 301) unit according to any of the preceding claims, **characterized by** an electrical or electronic circuitry (3, 103) for mechanically support and electrical connection of electronic components, wherein said circuitry (2, 102) is at least partly embedded in a material the passenger service panel (4, 104, 204, 304) is made of.

4. The passenger service unit (1, 101, 201, 301) according to any of the preceding claims, **characterized by** an RFID tag (7, 107) for identification and/or for tracking of the passenger service unit (1, 101, 201, 301).

5. The passenger service unit (1, 101, 201, 301) according to claim 4, **characterized in that** the RFID tag (7, 107) is embedded in a material the passenger service panel (4, 104, 204, 304) is made of.

6. The passenger service unit (1, 101, 201, 301) according to one of the preceding claims, **characterized by** at least one system of voice coil (313, 413) for initiating a vibration on the passenger service panel (4, 104, 204, 304), wherein the system of voice coil (313, 413) is mechanically contacted to the passenger service panel (4, 104, 204, 304), such that the passenger service panel (4, 104, 204, 304) acts like a sounding board transferring the sound to the aircraft passenger cabin.

7. The passenger service unit (1, 101, 201, 301) according to claim 6, **characterized in that** the sounding board need no louvers for transferring the sound to the aircraft passenger cabin.

8. The passenger service unit (1, 101, 201, 301) according to claim 6 or 7, **characterized by** at least one dustproof area with at least one wall encapsulating the dustproof area, in particular a box for housing a oxygen supply device (312, 412), wherein the system of voice coil (313, 413) is attached to the at least one wall of the dustproof area.

9. Method of producing a passenger service panel (4, 104, 204, 304) comprising:
- preparation of a mold for said passenger service panel (4, 104, 204, 304),
- preparation of a material to produce said passenger service panel (4, 104, 204, 304),
- placing at least one electrical conducting path (2,102) in the mold,
- filling the mold with material for molding the passenger service panel (4, 104, 204, 304),
- molding the passenger service panel (4, 104, 204, 304) from said mold and said material,
wherein the at least one electrical conducting path (2, 102,) is at least partially embedded in the material of said passenger service panel (4, 104, 204, 304) by placing said electrical conducting path in the mold before the final molding of the passenger service panel.

10. Method of producing a passenger service panel (4, 104, 204, 304) according to claim 9, wherein at least one circuitry (3, 103) and/or RFID tag (7, 107) is directly attached to said passenger service panel (4, 104, 204, 304).

11. Method of producing a passenger service panel (4, 104, 204, 304) according to claim 9 or 10, comprising:
- placing at least one circuitry (3, 103) and/or RFID tag (7, 107) in the mold, wherein the circuitry (3, 103) and/or RFID tag (7, 107) is placed in the mold before the final molding of the passenger service panel (4, 104, 204, 304).

12. Method of producing a passenger service panel (4, 104, 204, 304) according to one of the claims 9 to 11, **characterized in that** electronic components is covered with a wire mesh during the forming process for thermal protection.

13. Method of producing a passenger service panel (4, 104, 204, 304) according to one of the claims 9 to 12, **characterized in that** a forming process like injection molding, laminating, deep drawing or pressing is used to form the passenger service panel (4, 104, 204,304).

14. Method of producing a passenger service panel (4, 104, 204, 304) according to one of the claims 9 to 13, **characterized in that** the conducting path (2, 102) will be fixed in a surrounding material of the passenger service panel (4, 104, 204, 304) without insulating, wherein the electrical connecting terminal (5, 105) is at least partly exposed to the outside for electrical connection.

15. Method of producing a passenger service panel (4, 104, 204, 304) according to one of the claims 9 to 14, **characterized in that** the passenger service panel (4, 104, 204, 304) is made of sheet molding compound.

## Patentansprüche

1. Passagierserviceeinheit (1, 101, 201, 301), insbesondere für eine Flugzeugpassagierkabine, umfassend:
- mindestens ein Passagierservicepaneel (4, 104, 204, 304), mit Befestigungselementen zum Befestigen des Paneels an Innenraumkomponenten oder der Rahmenkonstruktion des Flugzeugs,
- mindestens eine elektrische Komponente (6) zum Unterhalten oder Informieren von Passagieren, mechanisch befestigt an dem Passagierservicepaneel (4, 104, 204, 304),
- mindestens eine elektrische Anschlussklemme (5, 105) zum elektrischen Verbinden der mindestens einen elektrischen Komponente (6) und
- eine elektrische Verbindung zur Versorgung der mindestens einen elektrischen Komponente (6) mit elektrischer Energie und / oder zur Übertragung von Informationen,
**dadurch gekennzeichnet, dass** die elektrische Verbindung leitfähige Pfade (2, 102) umfasst, insbesondere aus leitfähigen Pfaden (2, 102) besteht, die direkt an dem Passagierservicepaneel befestigt sind (4, 104, 204, 304) und zumindest teilweise in das Material des Passagierservicepaneels eingelassen sind, aus dem das Passagierservicepaneel (4, 104, 204, 304) hergestellt ist.

2. Passagierserviceeinheit (1, 101, 201, 301) gemäß einem der vorhergehenden Ansprüche, **dadurch gekennzeichnet, dass** die elektrische Anschlussklemme (5, 105) zumindest teilweise zur elektrischen Verbindung der Außenseite ausgesetzt ist, zwecks einer elektrischen Kontaktierung.

3. Passagierserviceeinheit (1, 101, 201, 301) gemäß einem der vorhergehenden Ansprüche, **gekennzeichnet durch** eine elektrische oder elektronische Schaltung (3, 103) zur mechanischen Unterstützung und elektrischen Verbindung von elektronischen Bauteilen, wobei die Schaltung (2, 102) zumindest teilweise in ein Material eingelassen ist, aus dem das Passagierservicepaneel (4, 104, 204, 304) besteht.

4. Passagierserviceeinheit (1, 101, 201, 301) gemäß einem der vorhergehenden Ansprüche, **gekennzeichnet durch** ein RFID-Tag (7, 107) der Passagierserviceeinheit (1, 101, 201, 301) zum Identifizieren und / oder Verfolgen.

5. Passagierserviceeinheit (1, 101, 201, 301) gemäß Anspruch 4, **dadurch gekennzeichnet, dass** das RFID-Tag (7, 107) in das Material, aus dem das Passagierservicepaneel (4, 104, 204, 304) besteht, eingebettet ist.

6. Passagierserviceeinheit (1, 101, 201, 301) gemäß einem der vorhergehenden Ansprüche, **dadurch gekennzeichnet, dass** mindestens ein Schwingspulensystem (313, 413) zum Ausüben von Vibrationen auf das Passagierservicepaneel (4, 104, 204, 304) vorgesehen ist, wobei das Schwingspulensystem (313, 413) mechanisch derart mit dem Passagierservicepaneel (4, 104, 204, 304) verbunden ist, dass das Passagierservicepaneel (4, 104, 204, 304) als Resonanzkörper fungiert, welcher den Ton in die Passagierflugzeugkabine überträgt.

7. Passagierserviceeinheit (1, 101, 201, 301) gemäß Anspruch 6, **dadurch gekennzeichnet, dass** in dem Resonanzkörper keine Luftschlitze vorhanden sind, um den Ton in die Passagierflugzeugkabine zu übertragen.

8. Passagierserviceeinheit (1, 101, 201, 301) gemäß Anspruch 6 oder 7, **dadurch gekennzeichnet, dass** mindestens ein staubdichter Bereich, der durch mindestens eine Wandung eingekapselt ist, insbesondere ein Fach zur Aufnahme eines Sauerstoffversorgungsgeräts (312, 412), wobei das Schwingspulensystem (313, 413) an der mindestens einen Wandung des staubdichten Bereichs befestigt ist.

9. Verfahren zum Herstellen eines Passagierservicepaneels (4, 104, 204, 304) umfassend:
- Bereitstellen einer Form für das Passagierservicepaneel (4, 104, 204, 304),
- Bereitstellen von Material zum Herstellen des Passagierservicepaneels (4, 104, 204, 304),
- Platzieren mindestens eines elektrisch leitfähigen Pfads (2, 102) in der Form,
- Ausfüllen der Form mit Material zum Ausformen des Passagierservicepaneels (4, 104, 204, 304),
- Ausformen des Passagierservicepaneels (4, 104, 204, 304) mittels der Form und dem Material, wobei der mindestens eine elektrisch leitfähige Pfad (2, 102) zumindest teilweise in das Material des Passagierservicepaneels (4, 104, 204, 304) durch Platzieren des elektrisch leitfähigen Pfads in der Form vor dem finalen Ausformen des Passagierservicepaneels eingebettet wird.

10. Verfahren zum Herstellen eines Passagierservicepaneels (4, 104, 204, 304) gemäß Anspruch 9, wobei mindestens eine Schaltung (3, 103) und / oder ein RFID-Tag (7, 107) direkt an dem Passagierservicepaneel (4, 104, 204, 304) befestigt ist.

11. Verfahren zum Herstellen eines Passagierservicepaneels (4, 104, 204, 304) gemäß Anspruch 9 oder 10, umfassend:
- Platzieren mindestens einer Schaltung (3, 103) und / oder eines RFID-Tags (7, 107) in der Form, wobei die Schaltung (3, 103) und / oder das RFID-Tag (7, 107) in der Form platziert ist / sind, bevor der finale Formvorgang des Passagierservicepaneels (4, 104, 204, 304) erfolgt.

12. Verfahren zum Herstellen eines Passagierservicepaneels (4, 104, 204, 304) gemäß einem der Ansprüche 9 bis 11, **dadurch gekennzeichnet, dass** elektronische Bauteile während des Formungsprozesses zum thermischen Schutz mit einem Drahtgeflecht abgedeckt werden.

13. Verfahren zum Herstellen eines Passagierservicepaneels (4, 104, 204, 304) gemäß einem der Ansprüche 9 bis 12, wobei zum Ausformen des Passagierservicepaneels (4, 104, 204, 304) ein Spritzgießverfahren, Laminierverfahren, Tiefziehverfahren oder Pressverfahren eingesetzt wird.

14. Verfahren zum Herstellen eines Passagierservicepaneels (4, 104, 204, 304) gemäß einem der Ansprüche 9 bis 13, **dadurch gekennzeichnet, dass** der leitfähige Pfad (2, 102) ohne Schutzisolation in dem Passagierservicepaneel (4, 104, 204, 304) in einem umliegenden Material fixiert wird, wobei die elektrische Anschlussklemme (5, 105) zumindest teilweise der Außenseite ausgesetzt ist zwecks einer elektrischen Kontaktierung.

15. Verfahren zum Herstellen eines Passagierservicepaneels (4, 104, 204, 304) gemäß einem der vorhergehenden Ansprüche 9 bis 14, **dadurch gekennzeichnet, dass** das Passagierservicepaneel (4, 104, 204, 304) aus plattenförmigen Pressmassen hergestellt wird.

## Revendications

1. Unité de service pour passagers (1, 101, 201, 301) en particulier pour une cabine de passagers d'avion, comprenant :
- au moins un panneau de service pour passagers (4, 104, 204, 304) avec des éléments de fixation pour la fixation du panneau à un composant intérieur ou à une structure de l'avion,
- au moins un composant électrique (6) pour le divertissement ou l'information des passagers attaché mécaniquement au panneau de service pour passagers (4, 104, 204, 304),
- au moins un terminal de liaison électrique (5, 105) pour la liaison électrique dudit au moins un composant électrique (6) et
- une liaison électrique pour l'alimentation en énergie électrique et/ou la transmission de l'information audit au moins un composant électrique (6),
**caractérisée en ce que** la liaison électrique comprend, en particulier se compose de voies conductrices (2, 102) directement attachées au panneau de service pour passagers (4, 104, 204, 304) et au moins en partie intégrées dans un matériau, dont est constitué le panneau de service pour passagers (4, 104, 204, 304).

2. Unité de service pour passagers (1, 101, 201, 301) selon l'une quelconque des revendications précédentes, **caractérisée en ce que** le terminal de liaison électrique (5, 105) est au moins en partie exposé à l'extérieur pour la liaison électrique.

3. Unité de service pour passagers (1, 101, 201, 301) selon l'une quelconque des revendications précédentes, **caractérisée par** un circuit électrique ou électronique (3, 103) pour le support mécanique et la liaison électrique de composants électroniques, dans laquelle ledit circuit (2, 102) est au moins en partie intégré dans un matériau, dont est constitué le panneau de service pour passagers (4, 104, 204, 304).

4. Unité de service pour passagers (1, 101, 201, 301) selon l'une quelconque des revendications précédentes, **caractérisée par** une étiquette RFID (7, 107) pour l'identification et/ou le suivi de l'unité de service pour passagers (1, 101, 201, 301).

5. Unité de service pour passagers (1, 101, 201, 301) selon la revendication 4, **caractérisée en ce que** l'étiquette RFID (7, 107) est intégrée dans un matériau, dont est constitué le panneau de service pour passagers (4, 104, 204, 304).

6. Unité de service pour passagers (1, 101, 201, 301) selon l'une quelconque des revendications précédentes, **caractérisée par** au moins un système de bobine mobile (313, 413) pour initier une vibration sur le panneau de service pour passagers (4, 104, 204, 304), dans laquelle le système de bobine mobile (313, 413) est mécaniquement en contact avec le panneau de service pour passagers (4, 104, 204, 304) de sorte que le panneau de service pour passagers (4, 104, 204, 304) agisse comme une caisse de résonance transférant le son à la cabine de passager d'avion.

7. Unité de service pour passagers (1, 101, 201, 301) selon la revendication 6, **caractérisée en ce que** la caisse de résonance ne nécessite aucune fente pour transférer le son à la cabine de passager d'avion.

8. Unité de service pour passagers (1, 101, 201, 301) selon la revendication 6 ou 7, **caractérisée par** au moins une zone étanche à la poussière avec au moins une paroi encapsulant la zone étanche à la poussière, en particulier un boîtier pour loger un dispositif d'alimentation en oxygène (312, 412), dans laquelle le système de bobine mobile (313, 413) est attaché à l'au moins une paroi de la zone étanche à la poussière.

9. Procédé de production d'un panneau de service pour passagers (4, 104, 204, 304) comprenant :
- la préparation d'un moule pour ledit panneau de service pour passagers (4, 104, 204, 304),
- la préparation d'un matériau pour produire ledit panneau de service pour passagers (4, 104, 204, 304),
- le placement d'au moins une voie conductrice électrique (2, 102) dans le moule,
- le remplissage du moule en matériau pour le moulage du panneau de service pour passagers (4, 104, 204, 304),
- le moulage du panneau de service pour passagers (4, 104, 204, 304) dans ledit moule et ledit matériau,
dans lequel l'au moins une voie conductrice électrique (2, 102) est au moins en partie intégrée dans le matériau dudit panneau de service pour passagers (4, 104, 204, 304) en plaçant ladite voie conductrice électrique dans le moule avant le moulage final du panneau de service pour passagers.

10. Procédé de production d'un panneau de service pour passagers (4, 104, 204, 304) selon la revendication 9, dans lequel au moins un circuit (3, 103) et/ou une étiquette RFID (7, 107) est directement attachée audit panneau de service pour passagers (4, 104, 204, 304).

11. Procédé de production d'un panneau de service pour passagers (4, 104, 204, 304) selon la revendication 9 ou 10, comprenant :
- le placement d'au moins un circuit (3, 103) et/ou une étiquette RFID (7, 107) dans le moule,
dans lequel le circuit (3, 103) et/ou l'étiquette RFID (7, 107) est placée dans le moule avant le moulage final du panneau de service pour passagers (4, 104, 204, 304).

12. Procédé de production d'un panneau de service pour passagers (4, 104, 204, 304) selon l'une quelconque des revendications 9 à 11, **caractérisé en ce que** des composants électroniques sont couverts par un treillis métallique pendant le processus de formation pour la protection thermique.

13. Procédé de production d'un panneau de service pour passagers (4, 104, 204, 304) selon l'une quelconque des revendications 9 à 12, **caractérisé en ce qu'**un procédé de formation, tel que le moulage par injection, laminage, emboutissage profond ou pressage est utilisé pour former le panneau de service pour passagers (4, 104, 204, 304).

14. Procédé de production d'un panneau de service pour passagers (4, 104, 204, 304) selon l'une quelconque des revendications 9 à 13, **caractérisé en ce que** la voie conductrice (2, 102) sera fixée dans un matériau environnant du panneau de service pour passagers (4, 104, 204, 304) sans isolant, dans lequel le terminal de liaison électrique (5, 105) est au moins en partie exposé à l'extérieur pour la liaison électrique.

15. Procédé de production d'un panneau de service pour passagers (4, 104, 204, 304) selon l'une quelconque des revendications 9 à 14, **caractérisé en ce que** le panneau de service pour passagers (4, 104, 204, 304) est en un composite de moulage en feuilles.
